# EUROPÄISCHE PATENTSCHRIFT

(11) **EP 3 276 633 B1**
(45) Veröffentlichungstag und Bekanntmachung des Hinweises auf die Patenterteilung: **02.10.2019**
(21) Anmeldenummer: 17181574.9
(22) Anmeldetag: 17.07.2017
(51) Int. Cl.: H01B 3/56, H01B 3/16, H02B 13/055

(54) **GASISOLIERTE ELEKTRISCHE VORRICHTUNG**
GAS-ISOLATED ELECTRIC DEVICE
DISPOSITIF ÉLECTRIQUE À ISOLATION GAZEUSE

(30) Priorität: 28.07.2016 DE 102016213852
(43) Veröffentlichungstag der Anmeldung: 31.01.2018
(73) Patentinhaber: Siemens Aktiengesellschaft, 80333 München (DE)
(72) Erfinder: Kessler, Florian Dr., 91315 Höchstadt an der Aisch (DE)

(56) Entgegenhaltungen:
- WO-A1-2014/053661
- GB-A- 998 866

## Beschreibung

Die Erfindung betrifft eine gasisolierte elektrische Vorrichtung mit einem dielektrischen Isoliergas, welches wenigstens eine Isoliergaskomponente umfasst, die teilweise fluoriert ist.

Nach dem Stand der Technik werden herkömmliche gasisolierte elektrische Vorrichtungen typischerweise mit Schwefelhexafluorid (SF₆) als Hauptkomponente des Isoliergases betrieben, da SF₆ eine besonders gute Isolationswirkung und vor allem eine hohe Durchschlagfestigkeit aufweist. Aus diesem Grund werden viele gasisolierte elektrische Vorrichtungen, beispielsweise gasisolierte Schaltvorrichtungen, gasisolierte Leiter und gasisolierte Transformatoren mit SF₆ als Isoliergas betrieben. Das Isoliergas dient dabei der Isolation zumindest eines innerhalb der elektrischen Vorrichtung angebrachten aktiven elektrischen Bauteils. Insbesondere bei Schaltvorrichtungen dient es auch zur Löschung eines beim Schaltvorgang entstehenden Schaltlichtbogens.

Da SF₆ ein hochwirksames Treibhausgas ist und auch in vergleichsweise niedrigen Konzentrationen erheblich zur Erderwärmung beiträgt, wurde in den letzten Jahren verstärkt nach Alternativen für diesen Stoff gesucht. So wurden verschiedene andere fluorierte Verbindungen als Hauptkomponente oder Zusatzkomponente in gasisolierten Vorrichtungen vorgeschlagen und zum Teil erfolgreich getestet. Bei diesen fluorierten Verbindungen kann es sich beispielsweise um Fluorketone handeln, wie in EP 2652752A1 und EP 2652753A1 beschrieben wird. WO 2014/053661 beschreibt eine gasisolierte elektrische Vorrichtung, umfassend ein dielektrisches Isoliergas mit Fluorketonen und einem Calciumsalz.

Es wurden aber auch andere fluorierte Verbindungen als Ersatzstoffe für SF6 beschrieben, beispielsweise Tetrafluormethan, Trifluoriodmethan, andere fluorierte und teilweise funktionalisierte Kohlenwasserstoffe oder fluorierte Xenon-Verbindungen. Abhängig von ihren dielektrischen Eigenschaften, ihrem Siedepunkt und dem gewünschten Einsatzzweck können SF₆ sowie die beschriebenen Ersatzstoffe entweder in Reinform oder in Kombination mit einer optionalen weiteren Isoliergaskomponente verwendet werden. Die fluorierte Isoliergaskomponente muss dabei nicht die Hauptkomponente sein. Sie kann auch in geringerer Konzentration zusammen mit einem im Überschuss vorliegenden Trägergas eingesetzt werden. Bislang wurde aber noch kein zufriedenstellender Ersatzstoff für SF₆ gefunden, der nicht zumindest eine fluorierte Teilkomponente im Isoliergas aufweist.

Ein grundsätzliches Problem der fluorierten Isoliergaskomponenten besteht darin, dass beim Betrieb der gasisolierten elektrischen Vorrichtung Fluorwasserstoff (HF) gebildet werden kann. Dies liegt unter anderem daran, dass ein Vorliegen oder Eindringen von Spuren von Feuchtigkeit in die elektrische Vorrichtung nie ganz ausgeschlossen werden kann. Vor allem durch eine elektrische Belastung kann dann beim Betrieb der Vorrichtung durch Reaktion der fluorierten Gaskomponente mit solchen Spuren von Wasser HF entstehen. HF ist ein sehr giftiges und ätzendes Gas, welches auch in sehr kleinen Mengen und Konzentrationen sowohl der Vorrichtung als auch lebenden Organismen schaden kann. Verbleibt es in der Vorrichtung, kann es vor allem die Vorrichtung selbst schädigen. Ist ein Austreten von Spuren von HF aus der Vorrichtung nicht auszuschließen (entweder im Betrieb oder auch nach der Lebensdauer der Vorrichtung, beispielsweise bei der Entsorgung), dann können auch Menschen und andere lebende Organismen durch diesen Giftstoff geschädigt werden. Dies ist ein grundsätzlicher Nachteil aller elektrischen Isoliergase, die fluorierte Verbindungen enthalten. Der Nachteil ist sogar noch gravierender für die SF₆-Ersatz-Verbindungen als für SF₆ selbst, da die Ersatzverbindungen typischerweise reaktiver sind als SF₆ und so unter elektrischer Belastung noch leichter Fluorwasserstoff bilden können. Die fluorierten Verbindungen, insbesondere die etwas höher reaktiven SF₆-Ersatzstoffe, können prinzipiell auch mit anderen Reaktionspartnern als Wasser unter Bildung von HF reagieren. So kann auch von anderen Reaktionspartnern Wasserstoff unter Bildung von HF abgespalten werden, beispielsweise von substituierten oder unsubstituierten Kohlenwasserstoffverbindungen oder anderen Wasserstoffquellen. Bei einer solchen Wasserstoffquelle kann es sich beispielsweise um eine wasserstoffhaltige Komponente des Isoliergases und/oder eine Verunreinigung und/oder eine Beimischung mit einer anderen Funktion als die der elektrischen Isolation handeln.

Eine bekannte Möglichkeit, das Problem der HF-Bildung zumindest zu reduzieren, besteht darin, solche gasisolierte elektrische Vorrichtungen nach außen besonders gut gasdicht abzudichten sowie unter Umständen auch mit feuchtigkeitsadsorbierenden Substanzen innerhalb des Gehäuses der Vorrichtung auszustatten. Das Eindringen von Restfeuchtigkeit oder anderen Wasserstoffquellen in das Gehäuse oder das Freisetzen von wasserstoffhaltigen Verbindungen innerhalb der Vorrichtung und somit die Bildung von HF können jedoch auch damit nicht vollständig verhindert werden. Beispielsweise kann auch Feuchtigkeit oder eine andere wasserstoffhaltige Verbindung aus den Feststoffisolatoren einer gasisolierten Leitung freigesetzt werden.

Die Aufgabe der vorliegenden Erfindung ist es daher, eine gasisolierte elektrische Vorrichtung anzugeben, bei der die Menge an potentiell vorliegendem Fluorwasserstoff reduziert ist.

Diese Aufgabe wird durch eine gasisolierte elektrische Vorrichtung mit den Merkmalen des Anspruchs 1 gelöst. Die erfindungsgemäße gasisolierte elektrische Vorrichtung umfasst ein dielektrisches Isoliergas, welches zumindest eine erste Isoliergaskomponente aufweist, die wenigstens teilweise fluoriert ist. Die Vorrichtung umfasst ferner ein Calciumsalz einer organischen Säure.

In dieser Vorrichtung dient das Isoliergas zur elektrischen Isolierung eines oder mehrerer elektrisch aktiver Bestandteile der Vorrichtung, beispielsweise eines elektrischen Leiters gegen einen Leitungsschirm oder zweier Schaltkontakte gegeneinander. Da das Isoliergas zumindest eine fluorierte Komponente aufweist, kann beim Eindringen von Feuchtigkeit in die Vorrichtung - insbesondere bei deren Betrieb - Fluorwasserstoff gebildet werden. Die Funktion des Calciumsalzes ist es, diesen Fluorwasserstoff durch chemische Reaktion unschädlich zu machen und dabei Calciumfluorid (CaF₂) zu bilden. Als weiteres Reaktionsprodukt entsteht dabei die Säure, deren Salz das als Reaktionspartner eingesetzte Calciumsalz war. Da Calciumfluorid schwerlöslich, reaktionsarm und gesundheitlich wie ökologisch unbedenklich ist, kann durch eine solche Reaktion der als unerwünschtes Nebenprodukt gebildete Fluorwasserstoff auf wirksame Weise unschädlich gemacht werden.

Unter der genannten "wenigstens teilweise fluorierten" Isoliergaskomponente soll dabei eine beliebige gasförmige chemische Verbindung verstanden werden, bei der wenigstens ein kovalent gebundenes Fluoratom vorliegt. Diese Verbindung muss dabei nicht notwendigerweise bei Raumtemperatur gasförmig sein. Für die Funktion im der erfindungsgemäßen Vorrichtung reicht es aus, wenn sie bei der Betriebstemperatur der Vorrichtung einen genügend hohen Dampfdruck besitzt, um als Komponente innerhalb des dielektrischen Isoliergases eine isolierende und/oder durchschlagshemmende Funktion auszuüben. Es soll also nicht ausgeschlossen sein, dass eine solche Verbindung in der Vorrichtung teils flüssig und teils in der Gasphase vorliegt.

Die genannte erste Isoliergaskomponente kann prinzipiell entweder als eine Komponente in einem gasförmigen Mehrkomponentensystem vorliegen oder sie kann auch als einzige Komponente des Isoliergases vorliegen. Wesentlich ist nur, dass zumindest ein fluoriertes Gas vorliegt, unabhängig davon, ob es noch einen oder mehrere weitere Bestandteile gibt, die jeweils entweder fluoriert sein können oder auch nicht.

Vorteilhafte Ausgestaltungen und Weiterbildungen der Erfindung gehen aus den von Anspruch 1 sowie der folgenden Beschreibung hervor.

Die erste Isoliergaskomponente kann vorteilhaft nicht nur teilweise, sondern vollständig fluoriert sein. Darunter soll verstanden werden, dass beispielsweise bei einem einzelnen Zentralatom alle Valenzen durch Fluorsubstituenten gebunden sind, wie dies zum Beispiel bei SF₆ oder CF₄ der Fall ist. Bei einem Kohlenwasserstoff oder einem funktionalisierten Kohlenwasserstoff soll darunter verstanden werden, dass alle Wasserstoffatome der zugrundeliegenden Verbindung durch Fluoratome ersetzt sind. Solche Verbindungen werden generell auch als perfluorierte Verbindungen bezeichnet.

Erfindungsgemäß ist das Calciumsalz das Salz einer organischen Säure. Ein Vorteil einer solchen Ausführungsform liegt darin, dass dann die bei der Reaktion mit HF zusammen mit CaF₂ gebildete organische Säure typischerweise weniger ätzend und/oder giftig ist als viele anorganische Säuren. Beispielsweise kann die genannte organische Säure eine Carbonsäure, ein Alkohol, ein Phenol, ein Enol, ein Thiol, ein Phosphorsäureester, eine Phosphonsäure, ein Schwefelsäureester, eine Sulfonsäure, eine CH-acide Verbindung und/oder eine NH-acide Verbindung sein. Es ist dabei nicht ausgeschlossen, dass mehrere dieser Säuregruppen innerhalb einer Verbindung, also im selben Molekül vorliegen. So ist die Gluconsäure beispielsweise sowohl ein Alkohol als auch eine Carbonsäure.

Die Säure, deren Calciumsalz als Teil der elektrischen Vorrichtung vorliegt, kann allgemein vorteilhaft eine Säurekonstante mit einem pKs-Wert von wenigstens +3,5 aufweisen. Dabei sollen die Salze stärkerer Säuren grundsätzlich nicht ausgeschlossen sein und können unter bestimmten Bedingungen ebenfalls zweckmäßig sein. Das Salz einer im oben beschriebenen pKs-Bereich liegenden gemäßigten oder schwachen Säure ist aber deshalb vorteilhaft, weil bei der Reaktion mit HF diese Säure wieder gebildet wird und dann im Vergleich zu stärkeren Säuren weniger ätzend wirkt und somit weniger schädigend für die Vorrichtung und die Umgebung ist. Insbesondere kann es sich um eine organische Säure mit einer Säurestärke in dem genannten Bereich handeln.

Die Vorrichtung kann vorteilhaft neben dem Calciumsalz der organischen Säure als weiteres Calciumsalz Calciumfluorid (CaF₂) umfassen. Unabhängig davon, neben welchem anderen Salz dieses Calciumfluorid vorliegt, zeigt dessen Vorhandensein, dass in der elektrischen Vorrichtung bereits HF gebildet wurde, welches durch Reaktion mit dem ursprünglichen (organischen) Calciumsalz, zu Calciumfluorid und der Säure des ersten Salzes umgewandelt wurde. Nur wenn noch gar keine Feuchtigkeit in die Vorrichtung eingedrungen ist und noch gar keine solche Reaktion stattgefunden hat, würde das Calciumfluorid in der Vorrichtung noch fehlen. Im Laufe der Lebensdauer der Vorrichtung wird aber durch die Reaktion der bei eindringender Feuchtigkeit unter Einfluss von elektrischer Spannung gebildeten Flusssäure mit dem erstgenannten Calciumsalz auch zusätzlich Calciumfluorid gebildet werden.

Das organische Calciumsalz kann besonders vorteilhaft ein Carboxylat und/oder ein Alkoholat sein. Diese beiden Gruppen schließen sich nicht gegenseitig aus, da ein Säuremolekül sowohl eine oder mehr Carboxygruppe(n) als auch eine oder mehr Hydroxygruppe(n) aufweisen kann, wie beispielsweise bei den Hydroxycarbonsäuren, die im Rahmen der vorliegenden Erfindung besonders bevorzugt sind.

Die Calciumcarboxylate und/oder Calciumalkoholate sind deshalb besonders vorteilhaft, weil die zugehörigen Säuren im Allgemeinen für die Vorrichtung und die Umgebung wenig schädlich sind.

Besonders vorteilhaft kann es sich bei dem Calciumsalz um das Salz einer von einer Kohlenhydratverbindung abgeleiteten Carbonsäure handeln. Bei dieser Art von Calciumsalz ist die bei der Reaktion mit HF entstehende Säure besonders unschädlich für die Vorrichtung und die Umgebung. Insbesondere kann die zugrundeliegende Kohlenhydratverbindung die Summenformel C₆ₙH₁₀ₙ₊₂O₅ₙ₊₁ aufweisen, es kann sich also um ein von einem Mono-Saccharid (n=1) oder einem Oligo- oder Poly-Saccharid (n>1) abgeleitetes Carbonsäuresalz handeln. Bei der von dem Kohlenhydrat abgeleiteten Säure kann es sich insbesondere um das Oxidationsprodukt dieses Kohlenhydrats handeln, beispielsweise nach der gleichen Art und Weise, wie sich die Gluconsäure durch Oxidation von der Glucose ableitet. Es kann sich also beispielsweise bei dem Calciumsalz um ein Salz der von Erythrose, Ribose, Xylose, Glucose, Mannose, Lactose, Maltose oder Saccharose abgeleiteten Säure handeln.

Ganz besonders vorteilhaft kann es sich bei dem Calciumsalz um ein Calciumgluconat handeln. Calciumgluconat ist unschädlich und ungiftig und ist sogar als Lebensmittelzusatzstoff E578 ohne Höchstmengenbeschränkung zugelassen, wo es als Säureregulator eingesetzt wird. Es kann grundsätzlich wasserfrei oder als Monohydrat zum Einsatz kommen. Dabei ist die wasserfreie Variante zu bevorzugen, um die Menge an Feuchtigkeit in der Vorrichtung zu reduzieren und so die Bildung von Fluorwasserstoff aus der fluorierten Isoliergaskomponente zu reduzieren. Die bei der Reaktion mit HF gebildete Gluconsäure ist ebenfalls für Lebensmittel zugelassen (als E574) und gesundheitlich relativ unbedenklich. Sie ist vor allem auch nicht schädigend für die elektrische Vorrichtung. Die entstehende Gluconsäure ist ebenso wie das Calciumsalz ein Feststoff. Es ist ganz allgemein als vorteilhaft im Rahmen der vorliegenden Erfindung anzusehen, wenn die Säure des Calciumsalzes ein Feststoff ist, da dann eine unkontrollierte Verteilung von gebildeter Flüssigkeit im Isolierraum vermieden wird.

Die organische Säure kann allgemein wenigstens teilweise fluoriert sein. Insbesondere kann sie perfluoriert sein. Mit anderen Worten kann wenigstens ein an Kohlenstoff gebundener Wasserstoff der zugrundeliegenden Säure durch ein Fluoratom ersetzt sein, oder es können mehrere oder sogar alle solche Wasserstoffatome durch Fluoratome ersetzt sein. Bei dieser Ausführungsform liegen weniger Wasserstoffatome vor, die bei der Reaktion mit der fluorierten Isoliergaskomponente zur Bildung von zusätzlichem Fluorwasserstoff führen könnten. Bei einer fluorierten Säure ist weiterhin typischerweise die Säurestärke im Vergleich zur entsprechenden nicht fluorierten Säure erhöht.

Die gasisolierte elektrische Vorrichtung kann einen Isolierraum mit wenigstens einer darin angeordneten elektrischen Komponente aufweisen. Dieser Isolierraum kann vorteilhaft von einem Gehäuse gegen die äußere Umgebung im Wesentlichen gasdicht abgeschlossen sein. Bei einem solchen Aufbau kann die wenigstens eine elektrische Komponente wirksam durch das Isoliergas elektrisch isoliert und/oder gegen Spannungsüberschläge geschützt werden. Durch die gasdichte Ausführung kann ein Entweichen von Isoliergas sowie ein Eindringen von Feuchtigkeit weitgehend unterbunden werden.

Das Calciumsalz kann besonders vorteilhaft innerhalb des Isolierraums vorliegen und/oder mit dem Isolierraum atmosphärisch verbunden sein. Mit anderen Worten ist das Calciumsalz so angeordnet, dass es mit dem Isoliergas in Kontakt kommen kann und so den aus diesem Gas potentiell gebildeten Fluorwasserstoff am Ort des Entstehens effektiv durch Reaktion binden und unschädlich machen kann.

Das Calciumsalz kann allgemein vorteilhaft als Bestandteil eines Pulvers vorliegen. Es kann Hauptbestandteil oder sogar alleiniger Bestandteil eines solchen Pulvers sein. Alternativ kann es aber auch im Gemisch mit einer anderen Substanz, beispielsweise einer Trägersubstanz, in einem solchen Pulver vorliegen.

Das Calciumsalz kann auch als Bestandteil eines Presslings vorliegen. Auch hier kann es als alleiniger Bestandteil, als Hauptbestandteil oder auch als Nebenbestandteil vorliegen. Die Bildung eines Presslings kann vorteilhaft sein, um eine zu feine Verteilung des als Feststoff vorliegenden Calciumsalzes im Isolierraum der Vorrichtung zu vermeiden. Ein solcher Pressling kann beispielsweise im Bereich einer Wand und/oder einer Seitenkammer des Isolierraums angeordnet sein. Innerhalb der Vorrichtung kann auch eine Mehrzahl solcher Presslinge vorliegen, insbesondere wenn die räumliche Ausdehnung der Vorrichtung groß ist. Dies ist beispielsweise bei einer gasisolierten Leitung der Fall. Wenn mehrere solche Presslinge oder auch andere Reservoirs für festes Calciumsalz über die Länge der Vorrichtung verteilt sind, kann ein Auffangen und Unschädlichmachen von Fluorwasserstoff über die ganze Abmessung der Vorrichtung hinweg erfolgen.

Alternativ kann das Calciumsalz auch als Bestandteil einer Tablette oder eines Granulats vorliegen. Auch dies sind einfach herzustellende feste Formen, die gut einem separaten Bereich der Vorrichtung festgehalten werden können.

Alternativ kann das Calciumsalz auch als Bestandteil einer Beschichtung vorliegen. Beispielsweise kann es sich um eine Beschichtung auf einer Wand des Isolierraums handeln. Eine solche Ausführungsform hat den Vorteil, dass kein frei beweglicher Feststoff im Inneren der Vorrichtung vorliegt.

Unabhängig von der genauen Form des festen Calciumsalzes - also beispielsweise als Pulver, als Kügelchen, als Pressling oder als Beschichtung - kann das Calciumsalz in einem vom Isolierraum separierten Bereich vorliegen. Ein solcher separierter Bereich sollte soweit abgetrennt sein, dass das Calciumsalz sich nicht ungehindert im Isolierraum verteilen kann. Er sollte jedoch atmosphärisch mit dem Gasraum verbunden sein, so dass eine Reaktion mit dem dort gebildeten HF erfolgen kann. Um dies beides zu erreichen, kann der separierte Bereich beispielsweise durch einen gas- und/oder flüssigkeitsdurchlässigen Beutel, durch ein Trenngitter und/oder ein Trennnetz definiert sein.

Die erste Isoliergaskomponente kann vorteilhaft Schwefelhexafluorid (SF₆) oder Tetrafluormethan (CF₄) oder Trifluoriodmethan (CF₃I) oder ein wenigstens teilweise fluoriertes Keton oder Nitril oder ein wenigstens teilweise fluorierter Kohlenwasserstoff (insbesondere ein wenigstens teilweise fluorierter ungesättigter Kohlenwasserstoff) oder ein wenigstens teilweise fluorierter Ether oder Thioether oder XeF₂ oder XeF₄ sein. Von den genannten Verbindungen oder Verbindungsklassen weist SF₆ eine besonders hohe elektrische Durchschlagfestigkeit auf und ist daher als Isoliergas weit verbreitet. Es weist allerdings ein besonders hohes Treibhauspotential (GWP für englisch "Global Warming Potential") auf und soll daher in Zukunft in vielen elektrischen Vorrichtungen durch weniger klimawirksame Verbindungen ersetzt werden. Von den genannten Ersatzstoffen haben sich Fluorketone und Fluornitrile als besonders vielversprechend erwiesen. Sie gelten daher im Rahmen der vorliegenden Erfindung als besonders bevorzugt. Weitere bevorzugte Stoffklassen sind Hydrofluorolefine oder Perfluorolefine, also ungesättigte Kohlenwasserstoffe.

Besonders vorteilhaft kann es sich bei der ersten Isoliergaskomponente um ein Fluorketon mit zwischen 3 und 12 Kohlenstoffatomen, insbesondere zwischen 4 und 6 Kohlenstoffatomen handeln. Allgemein kann es sich dabei um geradkettige oder verzweigte, um gesättigte oder ungesättigte, um teilweise oder vollständig fluorierte Ketone handeln. Fluorketone im genannten Kettenlängenbereich sind besonders bevorzugt, weil sie einen für den Betrieb in einer gasisolierten Vorrichtung besonders geeigneten Siedepunktbereich aufweisen. Aus dieser Gruppe besonders bevorzugt sind C5- und C6-Fluorketone, also Verbindungen mit 5 oder 6 Kohlenstoffatomen. Insbesondere das C5-Fluorketon, was von der Firma 3M unter dem Namen Novec5110 erhältlich ist, erweist sich als vielversprechende Isoliergaskomponente. Eine weitere besonders vielversprechende Alternative ist das C4-Fluornitril, welches von 3M unter dem Namen Novec4710 erhältlich ist.

Das dielektrische Isoliergas kann vorteilhaft wenigstens eine zweite Isoliergaskomponente umfassen. Dabei kann die erste, fluorierte Isoliergaskomponente grundsätzlich entweder als Haupt- oder als Nebenbestandteil vorliegen. Welche Ausführungsform günstiger ist, hängt dabei von den dielektrischen Eigenschaften der zwei oder mehr Gaskomponenten sowie deren Siedepunkten und deren Treibhauspotential ab.

Die zweite Isoliergaskomponente kann insbesondere ausgewählt sein aus der Gruppe bestehend aus Stickstoff (N₂), Kohlenstoffdioxid (CO₂), Sauerstoff (O₂), Stockstoffdioxid (NO₂), Stickstoffmonoxid (NO), Distickstoffmonoxid (N₂O), Helium, Neon, Argon, Krypton und Xenon. Alternativ oder zusätzlich kann es sich bei der zweiten oder weiteren Isoliergaskomponente aber auch um eine weitere fluorierte Verbindung handeln, analog wie im Zusammenhang mit der ersten Isoliergaskomponente beschrieben. Ganz allgemein können auch mehr als zwei solche Isoliergaskomponenten vorliegen. Beispielsweise kann auch eine als "Clean Air" bekannte Mischung von Stickstoff und Sauerstoff im Gemisch mit einer oder mehreren fluorierten Verbindungen vorliegen. Oder es kann zum Beispiel ein Gemisch aus Sauerstoff und Kohlenstoffdioxid im Gemisch mit einer oder mehreren fluorierten Verbindungen vorliegen.

Wenn beispielsweise ein Fluorketon oder ein anderer fluorierter Ersatzstoff für SF₆ im Gemisch mit einem nicht-fluorierten Gas vorliegt, dann kann die Stoffmengenkonzentration der fluorierten Isoliergaskomponente(n) vorteilhaft zwischen 1% und 40%, insbesondere zwischen 2% und 20% des gesamten dielektrischen Isoliergases betragen. Unter den genannten Prozentwerten sollen hierbei Volumenprozente verstanden werden. Aber auch SF6 kann in einem ähnlichen Konzentrationsverhältnis mit einem nicht fluorierten Trägergas im Gemisch vorliegen.

Die elektrische Vorrichtung kann zusätzlich zu den genannten Bestandteilen einen weiteren Feststoff zur Adsorption von Wasser umfassen. Dabei kann es sich insbesondere um einen Zeolith und/oder ein Silikagel handeln. Ein solcher Feuchtigkeits-Adsorber kann die Bildung von HF innerhalb der Vorrichtung bereits weitgehend reduzieren. Das Calciumsalz dient dann dazu, nur die trotz dieser Maßnahme gebildete minimale Menge an HF zuverlässig durch Reaktion zu binden.

Bei einer Ausführungsform mit zusätzlichem Feuchtigkeits-Adsorber kann dieser besonders vorteilhaft zusammen mit dem Calciumsalz innerhalb einer gemeinsamen Umhüllung, innerhalb eines gemeinsamen Pulvergemischs und/oder innerhalb eines gemeinsamen Presslings vorliegen. Unabhängig von der genauen Ausführung kann der Feuchtigkeits-Adsorber jedenfalls zusammen mit dem Calciumsalz in einem von dem Isolierraum separierten, aber atmosphärisch verbundenen Bereich vorliegen, wie oben im Zusammenhang mit dem Calciumsalz näher erläutert.

Bei der elektrischen Vorrichtung kann es sich insbesondere um eine gasisolierte Schaltvorrichtung handeln. Dies kann insbesondere eine metallverkapselte Schaltvorrichtung sein.

Alternativ kann es sich bei der elektrischen Vorrichtung um eine gasisolierte Leitung handeln.

Alternativ kann es sich bei der elektrischen Vorrichtung um einen gasisolierten Transformator handeln.

Nachfolgend wird die Erfindung anhand zweier bevorzugter Ausführungsbeispiele unter Bezugnahme auf die angehängten Zeichnungen beschrieben, in denen:
- Figur 1: eine schematische Darstellung einer gasisolierten Schaltvorrichtung in einer weitgehend geschlossenen Phase des Schaltens,
- Figur 2: eine schematische Darstellung einer gasisolierten Schaltvorrichtung in einer weitgehend geöffneten Phase des Schaltens,
- Figur 3: eine schematische Darstellung einer gasisolierten Leitung zeigt und
- Figur 4: eine schematische Darstellung eines Teilabschnitts einer solchen gasisolierten Leitung zeigt.

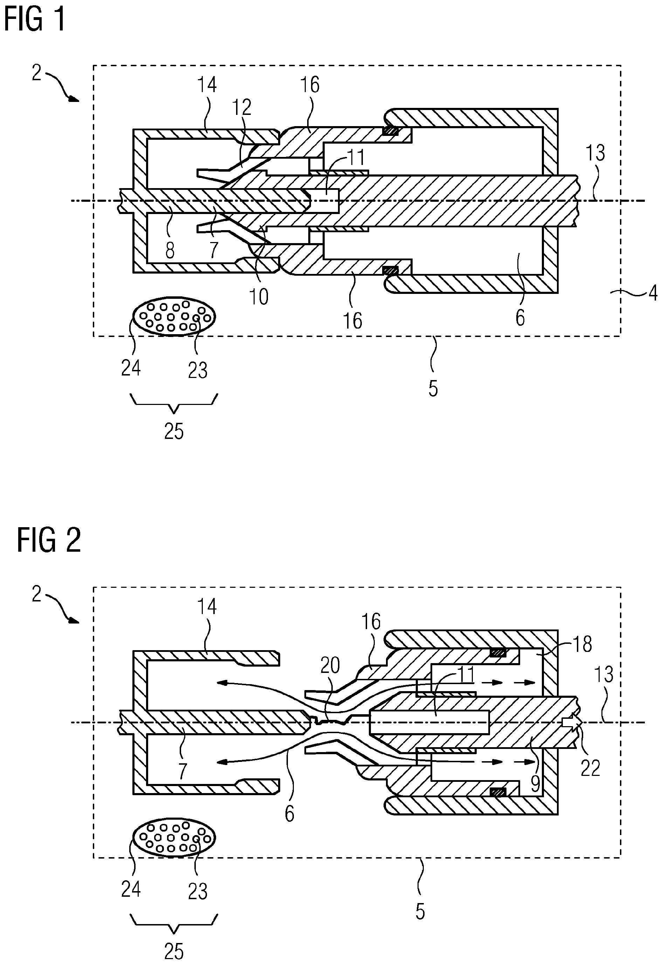

In Figur 1 ist eine schematische Schnittdarstellung einer gasisolierten Schaltvorrichtung 2 nach einem ersten Beispiel der Erfindung gezeigt. Diese Schaltvorrichtung 2 arbeitet nach dem Prinzip eines Blaskolbenschalters, welches im Folgenden mit Bezug auf die Figuren 1 und 2 erläutert wird. Dabei ist die Erfindung nicht auf Schaltvorrichtungen und schon gar nicht auf solche nach dem Blaskolbenprinzip beschränkt.

In Figur 1 ist eine Schaltvorrichtung 2, sei es eine Mittel- oder Hochschaltspannungsschaltvorrichtung dargestellt, die einen Isolierraum 4 aufweist. Der Isolierraum 4 ist durch ein Gehäuse 5 begrenz, welches schematisch gestrichelt um die Schaltkontakte 8 und 10 herum dargestellt ist. Bei den Schaltkontakten 8 und 10 handelt es sich um im Wesentlichen rotationssymmetrische Bauteile, die um die Rotationsachse 13 herum rotationssymmetrisch angeordnet sind. Der Schaltkontakt 8 weist einen zentralen Dorn 7 auf, der ringförmig von einem äußeren Schaltkontakt 14 umgeben wird. Diese beiden Teile 7 und 14 des Schaltkontaktes 8 sind hier zu einem integrierten Bauteil, den Schaltkontakt 8 vereint. Ebenso weist ein zweiter Schaltkontakt 10 ebenfalls einen zentralen Dorn 9 auf, der wiederum von einem äußeren Schaltkontakt 16 rotationssymmetrisch umgeben ist, auch diese Bauteile stellen ein integriertes Bauteil dar, das hierbei als Schaltkontakt 10 bezeichnet wird. Der zentrale Dorn 7 fügt sich dabei, wie in Figur 1 dargestellt, im geschlossenen Zustand in eine Bohrung 11 ein, die entlang der Rotationsachse 13 in den zentralen Dorn 9 des Schaltkontaktes 10 eingebracht ist. Ferner berühren sich die äußeren Schaltkontakte 14 und 16, wobei diese den Hauptstrompfad darstellen. Ferner ist eine Düse 12 vorgesehen, die beispielsweise aus einem Kunststoff besteht, und die ebenfalls rotationssymmetrisch bzgl. der Rotationsachse 13 um den zentralen Dorn 7 des Schaltkontaktes 8 angeordnet ist.

Beim Öffnen der Schaltanlage 2 werden zunächst die äußeren Kontakte 14 und 16 voneinander getrennt, wozu mindestens ein Schaltkontakt durch einen Antrieb, veranschaulicht durch den Pfeil 22 in Figur 2 entlang der Rotationsachse 13 abgezogen wird. Der Trennvorgang erfolgt dabei insgesamt in wenigen Millisekunden, wobei aber nach dem Trennen der äußeren Kontakte 14 und 16 der Kontakt zwischen den zentralen Dornen 7 und 9 zunächst bestehen bleibt. Hierbei wird zunächst der Dorn 7 aus der Bohrung 11 des Dorns 9 gezogen. Gleichzeitig wird Isoliergas 6, das sich in einer Kompressionskammer 18 befindet, komprimiert. Ferner ist an dem Schaltkontakt 10 die Düse 12 in der Art angebracht, dass sie sich bezüglich des Dornes 7 entlang der Achse 13 bewegt.

Nachdem die Trennung der beiden Kontakte 8 und 10 so weit vorangeschritten ist, dass sich auch die inneren Dornen 7 und 9 nicht mehr berühren, bildet sich im Bereich der Düse 12 grob entlang der Rotationsachse 13 ein Lichtbogen 20 aus. Dieser wird durch das Isoliergas 6 gelöscht, das aus der Kompressionskammer 18, die Bestandteil des Kontaktes 10 ist, herausströmt.

Dieses Isoliergas, das in diesem Beispiel SF₆ ist, strömt entlang der Pfeile 6 in Figur 2 um den Lichtbogen 20 und löscht diesen aus. Dabei kann unter dem Einfluss von Restfeuchtigkeit oder von außen in das Gehäuse 5 eingedrungener Feuchtigkeit aus den Fluoratomen des SF₆ Fluorwasserstoff gebildet werden. Um zu verhindern, dass dieser Fluorwasserstoff die Vorrichtung schädigt sowie nach deren Außerbetriebsetzung Menschen und Umwelt belastet, ist in diesem Beispiel im unteren Bereich der Schaltvorrichtung 2 ein Beutel 24 angeordnet, welcher ein Pulver 23 mit einem Calciumsalz enthält. Dieses Calciumsalz reagiert mit dem gebildeten Fluorwasserstoff unter Bildung von CaF₂ und der dem Salz zugeordneten Säure. CaF₂ ist ein schwerlöslicher Feststoff, der nach dieser Reaktion in dem Beutel verbleibt. Auch die gebildete Säure kann ein Feststoff sein, der vorteilhaft in dem Beutel verbleibt. Beispielsweise handelt es sich bei der Verwendung von Calciumgluconat bei der entstehenden Säure um Gluconsäure, welche ebenfalls ein Feststoff ist, der vorteilhaft in dem Beutel verbleibt. Somit wird der Fluorwasserstoff durch Reaktion abgefangen und in unschädliche Endprodukte umgewandelt. Der Beutel 24 mit dem Pulver 23 ist in einem separaten Bereich 25 der Vorrichtung 2 angeordnet, so dass er die Funktion der Schaltkontakte 8 und 10 nicht beeinträchtigt.

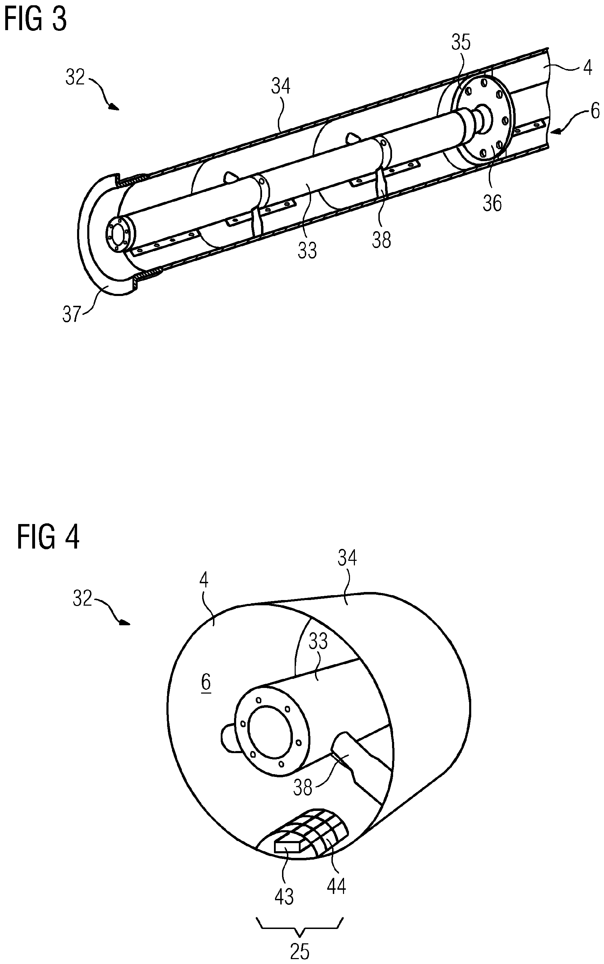

Figur 3 zeigt eine schematische perspektivische Darstellung einer gasisolierten Leitung 32 nach einem zweiten Ausführungsbeispiel der Erfindung. Eine vergrößerte Darstellung eines Teilbereichs dieser Leitung 32 ist in Figur 4 gezeigt. Die gasisolierte Leitung 32 weist einen Innenleiter 33 auf, der durch einen Isolierraum 4 von einer elektrisch leitenden Hülle 34 getrennt ist. Der Isolierraum 4 ist mit Isoliergas 6 gefüllt, welches den Innenleiter 33 elektrisch von der leitenden Hülle 34 trennt. Dieses Isoliergas 6 kann beispielsweise ein Fluorketon im Gemisch mit Stickstoff als Trägergas umfassen. Im linken Teil der Figur 3 ist ein Kopfstück 37 gezeigt, über welches der gezeigte Leitungsabschnitt an weitere solche Abschnitte angeflanscht werden kann. Im rechten Teil ist ein Scheibenisolator 36 gezeigt. Solche Scheibenisolatoren 36 können in regelmäßigen oder unregelmäßigen Abschnitten angeordnet sein, um den Innenleiter gegen eine umgebende Außenelektrode 35 zu zentrieren und dabei zu isolieren. Weiterhin sind dazwischen in regelmäßigen oder unregelmäßigen Abschnitten Stützisolatoren 38 vorgesehen, um den Innenleiter zwischen den Scheibenisolatoren vor allem nach unten hin gegen die Wirkung der Schwerkraft abzustützen. Neben den vereinzelten Scheibenisolatoren 36 und Stützisolatoren 38 wird der Innenleiter 33 in den Zwischenbereichen nur durch das Isoliergas 6 gegen die Hülle 34 isoliert.

In dem in Figur 3 gezeigten Ausschnitt ist zu erkennen, dass auch bei diesem Ausführungsbeispiel ein festes Calciumsalz innerhalb der Vorrichtung angeordnet ist, welches dazu dient, eventuell entstehenden Fluorwasserstoff in unschädliche Produkte umzuwandeln. Das feste Calciumsalz liegt hier als Bestandteil eines Presslings 43 vor, welcher in einem separaten Bereich 25 in der Nähe der Hülle 34 angeordnet ist. Der Pressling 43 wird in diesem Bereich 25 durch ein Trenngitter 44 gehalten. Dieses Gitter ist gas- und flüssigkeitsdurchlässig, ist aber dazu geeignet, den Pressling festzuhalten. Das Calciumsalz kann im gezeigten Beispiel zusammen mit einem feuchtigkeitsbindenden Zeolith in einem gemeinsamen Pressling vorliegen. Eventuell in der gasisolierten Leitung 32 vorhandene Feuchtigkeit kann so also zunächst in dem Zeolith adsorbiert werden. Die Restfeuchtigkeit innerhalb der Leitung 32 ist dadurch sehr gering. Wenn durch diese geringe Restfeuchtigkeit beim Betrieb der Leitung 32 trotzdem durch Reaktion mit der fluorierten Gaskomponente HF freigesetzt wird, so kann dieses wiederum durch Reaktion mit dem im Pressling ebenfalls enthaltenen Calciumsalz unschädlich gemacht werden. Um die gasisolierte Leitung 32 auf ihrer ganzen Länge vor dem schädlichen Einfluss von gebildetem HF zu schützen, können über diese Länge mehrere solche Reservoirs von Calciumsalz vorgesehen sein. Diese Reservoirs können insbesondere jeweils im Bereich der Flansche angeordnet sein, durch die einzelne Leitungsabschnitte aneinandergekoppelt werden. Die Reservoirs können in regelmäßigen oder unregelmäßigen Abständen und mit oder ohne Zusatz von Feuchtigkeitsadsorbern angeordnet sein. Der Feuchtigkeitsadsorber kann alternativ zu dem beschriebenen gemeinsamen Pressling auch in einem von dem Calciumsalz getrennten Festkörper vorliegen. Bei dem Einsatz in einer Gasisolierten Leitung ist es vorteilhaft, wenn der separate Bereich für das Reservoir vergleichsweise flach und dicht an der Wand ist, da ansonsten der Abstand vom Innenleiter zum Reservoir und/oder einer Begrenzung des separaten Bereichs eine kritische Entfernung für einen Spannungsüberschlag unterschreiten könnte.

## Patentansprüche

1. Gasisolierte elektrische Vorrichtung (2,32), umfassend
- ein dielektrisches Isoliergas (6) mit einer wenigstens teilweise fluorierten ersten Isoliergaskomponente
- und ein Calciumsalz, bei welcher das Calciumsalz das Salz einer organischen Säure ist.

2. Vorrichtung nach Anspruch 1, wobei die Säure des Calciumsalzes einen pKs-Wert von wenigstens +3,5 aufweist.

3. Vorrichtung (2,32) nach Anspruch 1 oder 2, welche neben dem genannten Calciumsalz als weiteres, davon verschiedenes Calciumsalz Calciumfluorid (CaF₂) umfasst.

4. Vorrichtung (2,32) nach Anspruch 2 oder 3, bei der das Calciumsalz ein Carboxylat' und/oder ein Alkoholat ist.

5. Vorrichtung (2,32) nach einem der Ansprüche 2 bis 4, bei welcher das Calciumsalz das Salz einer von einer Kohlenhydrat-Verbindung abgeleiteten Säure ist, insbesondere das Salz einer von einem Mono-, Oligo- oder Poly-Saccharid abgeleiteten Säure.

6. Vorrichtung (2,32) nach Anspruch 5, bei der das Calciumsalz ein Calciumgluconat ist.

7. Vorrichtung (2,32) nach einem der vorhergehenden Ansprüche, bei der die organische Säure wenigstens teilweise fluoriert ist.

8. Vorrichtung (2,32) nach einem der vorhergehenden Ansprüche, welche wenigstens einen Isolierraum (4) mit wenigstens einer darin angeordneten elektrischen Komponente (8,10,33) aufweist.

9. Vorrichtung (2,32) nach Anspruch 8, bei der das Calciumsalz innerhalb des Isolierraums (4) vorliegt und/oder mit dem Isolierraum (4) atmosphärisch verbunden ist.

10. Vorrichtung (2,32) nach Anspruch 9, bei welcher das Calciumsalz als Bestandteil eines Pulvers (23) und/oder wenigstens eines Presslings (43) und/oder einer Tablette und/oder eines Granulats und/oder einer Beschichtung vorliegt.

11. Vorrichtung (2,32) nach einem der vorhergehenden Ansprüche, bei welcher die erste Isoliergaskomponente Schwefelhexafluorid (SF₆) oder Tetrafluormethan (CF₄) oder Trifluoriodmethan (CF₃I) oder ein wenigstens teilweise fluoriertes Keton oder ein wenigstens teilweise fluoriertes Nitril oder ein wenigstens teilweise fluorierter Kohlenwasserstoff oder ein wenigstens teilweise fluorierter Ether oder Thioether ist oder XeF₂ oder XeF₄ ist.

12. Vorrichtung (2,32) nach einem der vorhergehenden Ansprüche, bei welcher die erste Isoliergaskomponente ein Fluorketon oder Fluornitril oder Hydroflurolefin oder Perfluorlefin mit zwischen 3 und 6 Kohlenstoffatomen ist.

13. Vorrichtung (2,32) nach einem der vorhergehenden Ansprüche, bei welcher das dielektrische Isoliergas eine zweite Isoliergaskomponente umfasst, welche insbesondere ausgewählt ist aus der Gruppe bestehend aus Stickstoff (N₂), Kohlenstoffdioxid (CO₂), Sauerstoff (O₂), Stickstoffdioxid (NO₂), Stickstoffmonoxid (NO), Distickstoffmonoxid (N₂O), Helium, Neon, Argon, Krypton und Xenon.

14. Vorrichtung (2,32) nach einem der vorhergehenden Ansprüche, welche zusätzlich einen Feststoff zur Adsorption von Wasser umfasst, insbesondere ein Zeolith oder ein Silikagel.

15. Vorrichtung nach einem der vorhergehenden Ansprüche, welche als gasisolierte Schaltvorrichtung (2), als gasisolierte Leitung (32) und/oder als gasisolierter Transformator ausgestaltet ist.

## Claims

1. Gas-insulated electrical device (2, 32), comprising
- a dielectric insulation gas (6) including an at least partly fluorinated first insulation gas component
- and a calcium salt, in which the calcium salt is the salt of an organic acid.

2. Device according to Claim 1, wherein the acid of the calcium salt has a pKa of at least +3.5.

3. Device (2, 32) according to Claim 1 or 2, which, as well as the calcium salt mentioned, comprises calcium fluoride (CaF₂) as a further, different calcium salt.

4. Device (2, 32) according to Claim 2 or 3, in which the calcium salt is a carboxylate and/or an alkoxide.

5. Device (2, 32) according to any of Claims 2 to 4, in which the calcium salt is the salt of an acid derived from a carbohydrate compound, especially the salt of an acid derived from a mono-, oligo- or polysaccharide.

6. Device (2, 32) according to Claim 5, in which the calcium salt is a calcium gluconate.

7. Device (2, 32) according to any of the preceding claims, in which the organic acid is at least partly fluorinated.

8. Device (2, 32) according to any of the preceding claims, having at least one insulation space (4) with at least one electrical component (8, 10, 33) disposed therein.

9. Device (2, 32) according to Claim 8, in which the calcium salt is within the insulation space (4) and/or is atmospherically connected to the insulation space (4).

10. Device (2, 32) according to Claim 9, in which the calcium salt is present as a constituent of a powder (23) and/or of at least one compact (43) and/or of a tablet and/or of a pelletized material and/or of a coating.

11. Device (2, 32) according to any of the preceding claims, in which the first insulation gas component is sulfur hexafluoride (SF₆) or tetrafluoromethane (CF₄) or trifluoroiodomethane (CF₃I) or an at least partly fluorinated ketone or an at least partly fluorinated nitrile or an at least partly fluorinated hydrocarbon or an at least partly fluorinated ether or thioether or XeF₂ or XeF₄.

12. Device (2, 32) according to any of the preceding claims, in which the first insulation gas component is a fluoroketone or a fluoronitrile or hydrofluoroolefin or perfluoroolefin having from 3 to 6 carbon atoms.

13. Device (2, 32) according to any of the preceding claims, in which the dielectric insulation gas comprises a second insulation gas component which is especially selected from the group consisting of nitrogen (N₂), carbon dioxide (CO₂), oxygen (O₂), nitrogen dioxide (NO₂), nitrogen monoxide (NO), dinitrogen monoxide (N₂O), helium, neon, argon, krypton and xenon.

14. Device (2, 32) according to any of the preceding claims, which additionally comprises a solid for absorption of water, especially a zeolite or a silica gel.

15. Device according to any of the preceding claims, configured as a gas-insulated switch device (2), as a gas-insulated wire (32) and/or as a gas-insulated transformer.

## Revendications

1. Dispositif (2, 32) électrique à isolation gazeuse, comprenant
- un gaz (6) isolant diélectrique, ayant un premier constituant fluoré au moins en partie
- et un sel de calcium, dans lequel le sel de calcium est le sel d'un acide organique.

2. Dispositif suivant la revendication 1, dans lequel l'acide du sel de calcium a un pKa d'au moins +3,5.

3. Dispositif (2, 32) suivant la revendication 1 ou 2, qui comprend, outre le sel de calcium mentionné, du fluorure de calcium (CaF₂), comme autre sel de calcium qui en diffère.

4. Dispositif (2, 32) suivant la revendication 2 ou 3, dans lequel le sel de calcium est un carboxylate et/ou un alcoolate.

5. Dispositif (2, 32) suivant l'une des revendications 2 à 4, dans lequel le sel de calcium est le sel d'un acide dérivé d'un composé d'hydrate de carbone, en étant notamment le sel d'un acide dérivé d'un monosaccharide, d'un oligosaccharide ou d'un polysaccharide.

6. Dispositif (2, 32) suivant la revendication 5, dans lequel le sel de calcium est un gluconate de calcium.

7. Dispositif (2, 32) suivant l'une des revendications précédentes, dans lequel l'acide organique est fluoré au moins en partie.

8. Dispositif (2, 32) suivant l'une des revendications précédentes, qui a au moins un espace (4) isolé, ayant au moins un composant (8, 10, 33) électrique, qui y est mis.

9. Dispositif (2, 32) suivant la revendication 8, dans lequel le sel de calcium est présent à l'intérieur de l'espace (4) isolé et/ou est relié atmosphériquement avec l'espace (4) isolé.

10. Dispositif (2, 32) suivant la revendication (9), dans lequel le sel de calcium est présent sous la forme d'un constituant d'une poudre (23) et/ou d'au moins une briquette (43) et/ou d'un comprimé et/ou d'un granulé et/ou d'un revêtement.

11. Dispositif (2, 32) suivant l'une des revendications précédentes, dans lequel le premier constituant de gaz isolant est de l'hexafluorure de soufre (SF₆) ou du tétrafluorométhane (CF₄) ou du trifluoroiodométhane (CF₃I) ou une cétone fluorée au moins en partie ou un nitrile fluoré au moins en partie ou un hydrocarbure fluoré au moins en partie ou un éther-oxyde ou un thioéther fluoré au moins en partie ou XeF₂ ou XeF₄.

12. Dispositif (2, 32) suivant l'une des revendications précédentes, dans lequel le premier constituant du gaz isolant est une fluorocétone ou un fluoronitrile ou une hydrofluorooléfine ou une perfluorooléfine ayant entre 3 et 6 atomes de carbone.

13. Dispositif (2, 32) suivant l'une des revendications précédentes, dans lequel le gaz isolant diélectrique comprend un deuxième constituant de gaz isolant choisi notamment dans le groupe constitué de l'azote (N₂), du dioxyde de carbone (CO₂), de l'oxygène (O₂), du dioxyde d'azote (NO₂), du monoxyde d'azote (NO), du monoxyde de diazote (N₂O), d'hélium, de néon, d'argon, de krypton et de xénon.

14. Dispositif (2, 32) suivant l'une des revendications précédentes, qui comprend en plus une matière solide d'absorption de l'eau, notamment un zéolite ou un gel de silice.

15. Dispositif suivant l'une des revendications précédentes, qui est conformé en dispositif (2) de coupure à isolation gazeuse en ligne (32) à isolation gazeuse et/ou en transformateur à isolation gazeuse.
